# EUROPEAN PATENT SPECIFICATION

(11) **EP 0 385 766 B1**
(45) Date of publication and mention of the grant of the patent: **27.09.1995**
(21) Application number: 90302166.5
(22) Date of filing: 28.02.1990
(51) Int. Cl.: G05D 23/19, B60H 1/00

(54) **A control apparatus used for an automobile air conditioning system**
Steuervorrichtung für eine Fahrzeugklimaanlage
Dispositif de commande pour une installation d'air conditionné d'automobile

(30) Priority: 03.03.1989 JP 50098/89
(43) Date of publication of application: 05.09.1990
(73) Proprietor: SANDEN CORPORATION, Isesaki-shi Gunma, 372 (JP)
(72) Inventor: Tamaru, Yasuji, Nitta-gun, Gunma 370-04 (JP)
(74) Representative: Jackson, Peter Arthur

(56) References cited:
- EP-A- 0 143 176
- DE-A- 3 443 311
- US-A- 3 667 245
- US-A- 4 357 988
- US-A- 4 425 766
- PATENT ABSTRACTS OF JAPAN,vol. 10, no. 246 (M-510)(2302) 23 August 1986; & JP-A-61 75014

## Description

The present invention generally relates to an automobile air conditioning system, and more particularly, to the control of such a system.

In general, an automobile air conditioning system includes a refrigerant circuit, an electric circuit comprising electric devices, for one example, a condenser fan motor incorporated with a condenser of the refrigerant circuit and a control apparatus which includes a solid state element, i.e. an element made of a semiconductor material, the conductive properties of which are controlled by an applied current or voltage, for example a power transistor for controlling the operational condition of an electric device so as to control the refrigerant circuit. Since the control apparatus includes the solid state element, heat generated in the solid state element, by virtue of electrical resistance, may damage the element. Therefore, it is required to cool the element.

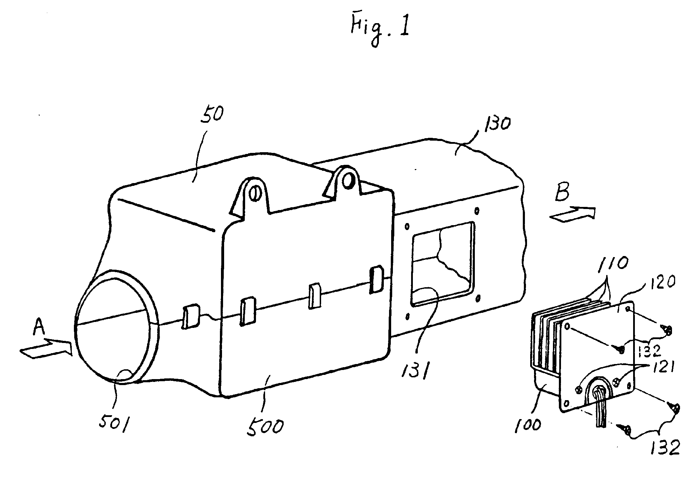

Figure 1 of the accompanying drawings shows a portion of one commercial automobile air conditioning system. Referring to Figure 1, a power transistor 100, as the solid element, of a control apparatus of a commercial automobile air conditioning system is provided with a plurality of radiating plates 110 firmly secured to a top surface thereof, and is firmly attached to an inner surface of a cover member 120 by a pair of screws 121. A cooling unit 50 comprises an evaporator (not shown) and a casing 500 air-tightly surrounding the evaporator while allowing air to pass through a heat exchanging portion of the evaporator. The casing 500 comprises two openings (only opening 501 is shown) opposing each other. The opening 501 is open to the outside of the cooling unit 50, and the other opening is air-tightly connected to one end opening (not shown) of a duct 130. The duct 130 comprises an opening 131 formed at a side surface thereof adjacent to the cooling unit 50. The opening 131 is air-tightly closed by the cover member 120 by a plurality of screws 132 after accommodation of the power transistor 100 and plates 110 in the duct 130.

In operation, air outside the cooling unit 50 is conducted into the cooling unit 50 through the opening 501 by operation of an evaporator fan (not shown) as depicted by arrow "A". The air in the cooling unit 50 is cooled during passage through a heat exchange portion of the evaporator. The cooled air consequentially flows into the duct 130 through the other end opening of the casing 500 to be conducted into the passenger compartment as depicted by arrow "B". At this time, a part of the cooled air in the duct 130 is heat exchanged with the plates 110 so as to prevent an excessive rise in temperature of the power transistor 100. In the event, thermic damage to the power transistor 100, that is, thermic damage to the control apparatus, is prevented.

However, in this commercial automobile air conditioning system, when electrical devices which consume large amounts of electrical power are used, generation of heat in the power transistor 100 is increased. Therefore the radiating plates 110 on the power transistor 100 are required to have a large dimension in order to prevent the excessive rise in temperature of the power transistor 100. As a result, the air in the duct 130 is not able to flow smoothly owing to the interference of both the power transistor 100 and the plates 110. Therefore the evaporator fan wastefully consumes electrical power in order to compensate for the interference with the flow of air in the duct 130.

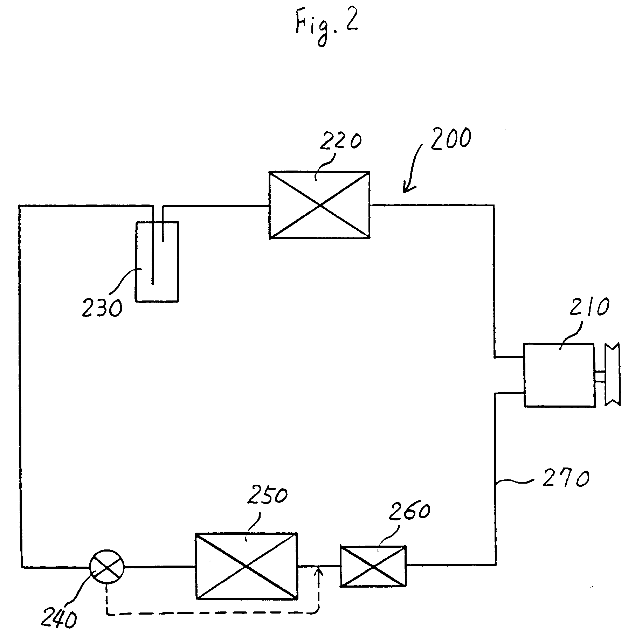

Figure 2 of the accompanying drawings shows a block diagram of a refrigerant circuit of an experimental automobile air conditioning system. Referring to Figure 2, a refrigerant circuit 200 includes a compressor 210, a condenser 220, a receiver-drier 230, a thermostatic expansion valve 240 and an evaporator 250 serially connected through pipe members 270. A cooling device 260 is disposed between the evaporator 250 and the compressor 210. A cooling device 260 is incorporated with a power transistor, which forms a solid state element, of a control apparatus of the automobile air conditioning system. The throttling condition of the expansion valve 240 is varied in response to temperature at an outlet of the evaporator 250, located upstream with respect to the cooling device 260, to maintain a proper degree of super-heat at the outlet of the evaporator 250. In this construction, the power transistor is cooled by virtue of heat exchange between the suction refrigerant gas and the cooling device 260 in order to prevent an excessive rise in temperature of the power transistor. In the event, thermic damage to the power transistor, that is thermic damage to the control apparatus, is prevented. However, in this experimental automobile air conditioning system, further hermetic joints are required in the refrigerant circuit for the cooling device 260 between the evaporator 250 and the compressor 210. Therefore, assembly of the refrigerant circuit is complicated

Accordingly, it is an object of the present invention to provide an automobile air conditioning system in which thermic damage to a solid state element of a control apparatus thereof is prevented without stagnating the flow of air in a duct conducting the air from an evaporator to a passenger compartment.

It is another object of the present invention to provide an automobile air conditioning system in which thermic damage to a solid state element of a control apparatus thereof is prevented without causing complicated assembly of a refrigerant circuit thereof.

DE-A-3443311 discloses a system in which electronic components to be cooled are mounted on a heat conducting surface, acting as a heat exchanger, on the outside of a housing which benefits from a cooling effect coming from inside.

According to the present invention, an automobile air conditioning system comprises a refrigerant circuit which includes a compressor, a condenser, an expansion element and an evaporator; and an electric circuit comprising at least one solid state unit which controls an electrical device of an element of the refrigerant circuit; characterised in that the solid state unit is fixed to an exterior surface of the evaporator so that heat generated in the solid state element is conducted to an exterior surface of the evaporator.

In the accompanying drawings:-
Figure 1 is a perspective view of a commercial automobile air conditioning system;
Figure 2 is a block diagram of a refrigerant circuit of an experimental automobile air conditioning system;
Figure 3 is a schematic block diagram of a compressor driving unit for use in an automobile air conditioning system in accordance with one embodiment of the present invention;
Figure 4 is a perspective view of a power transistor unit and a part of an evaporator of the automobile air conditioning system in accordance with one embodiment of the present invention; and,
Figure 5 is a perspective view of a cooling unit of the automobile air conditioning system in accordance with one embodiment of the present invention.

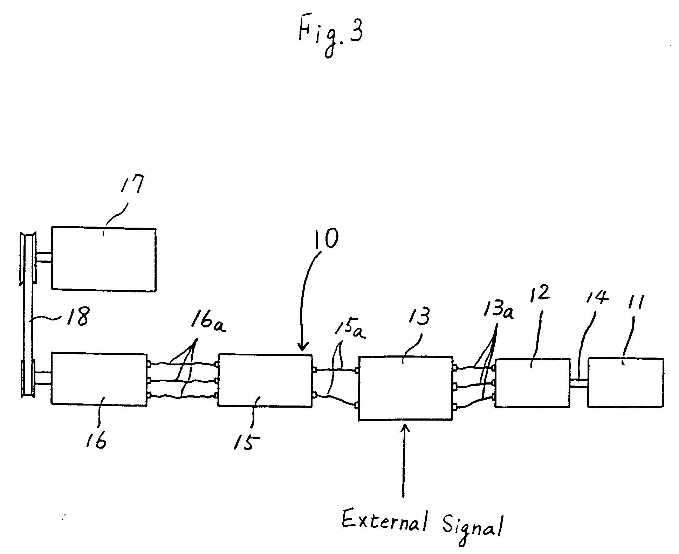

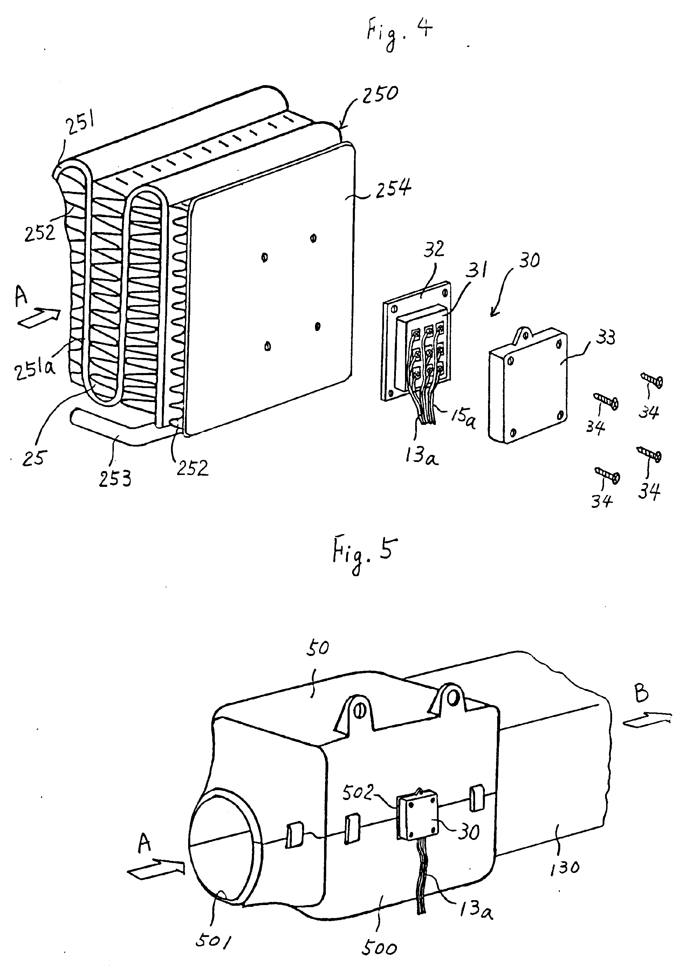

Figure 3 shows a schematic block diagram of a compressor driving unit used for an automobile air conditioning system in accordance with one embodiment of the present invention. Referring to Figure 3, a compressor driving unit 10 includes a compressor 11, a DC motor 12 and a control apparatus 13 controlling the rotational speed of the DC motor 12 in response to an external signal, for example dependent on the temperature of air in a passenger compartment. Rotational motion of the DC motor 12 is transmitted to the compressor 11 through a coupling device 14 in order to drive the compressor 11. The control apparatus 13 includes a power transistor 31, as shown in Figure 4, to vary the applied electrical power. An alternator 16 converts the rotational motion transmitted from an automobile engine 17 through belt a 18 to AC electrical power. The AC electric power is supplied to a rectifier 15 from the alternator 16 through wires 16a, and is rectified to DC electrical power. The DC electric power is supplied to the control apparatus 13 from the rectifier 15 through wires 15a, and the value thereof is varied in response to an external signal. The electrical power is conducted to the DC motor 12 from the control apparatus 13 through wires 13a, and the rotational speed of the DC motor 12 is varied in response to change in the value of the electric power. The rotational motion of the variable speed DC motor 12 is transmitted to the compressor 11 through the coupling device 14 to drive the compressor in acordance with the variable operational conditions. The refrigerant gas is compressed by compressor 11, and is discharged to a condenser (not shown), and then sequentially flows to a receiver-drier (not shown), a thermostatic expansion valve (not shown) and the evaporator 250, as shown in Figure 4, with a change in a phase thereof.

Figure 4 shows a power transistor unit and a part of an evaporator of the automobile air conditioning system in accordance with one embodiment of the present invention. Referring to Figure 4 in association with Figure 3, the evaporator 250 includes serpentine flat tube 251 comprising a plurality of straight portions 251a and a plurality of corrugated fins 252 fixed and sandwiched by opposing straight portions 251a of the serpentine flat tubo 251. The serpentine flat tube 251 and corrugated fins 252 jointly form a heat exchange portion 25. The serpentine flat tube 251 is provided with an outlet pipe 253 at one end opening thereof so as to conduct the refrigerant gas into the inlet port of the compressor 11. A pair of protective plates 254 (only one is shown) are securely joined to the outermost straight portions of the flat tube through the adjacent corrugated fin 252.

A power transistor unit 30 includes a conduction plate 32, a power transistor 31 fixed to the conduction plate 32 by screws (not shown) and a cover 33 for protecting the power transistor 31. The conduction plate 32 and cover 33 are fixed to the protective plate 254 of the evaporator 250 by a plurality of screws 34 so as to make contact of the conduction plate 32 with an exterior surface of the protective plate 254. Wires 15a and 13a connect the power transistor 31 to the rectifier 15 and motor 12, respectively. The wires 13a conduct variable DC electrical power to the DC motor 12.

Referring to Figure 5 in association with Figure 4, when the evaporator 250 is accommodated in the casing 500 of cooling unit 50, the power transistor unit 30 protrudes from the casing 500 through an opening 502 formed at a side surface of the casing 500 in order to obtain easy maintenance thereof.

In operation, the air from outside the cooling unit 50 is conducted into the cooling unit 50 through the opening 501 of cooling unit 50 by operation of an evaporator fan (not shown) as depicted by arrow "A". The air in the cooling unit 50 is cooled during passage through the heat exchange portion 25 of the evaporator 250 by virtue of heat exchanging with the refrigerant gas in the flat tube 251. The cooled air consequentially flows into the duct 130 to be conducted into the passenger compartment as depicted by arrow "B". When the air in the cooling unit 50 is heat exchanged with the refrigerant in the flat tube 25, the power transistor 31 is cooled by the well known manner in the art in order to prevent an excessive rise in temperature thereof. Thereby, thermic damage to the of power transistor 31 is prevented

In the present invention, since the power transistor unit of the control apparatus of the automobile air conditioning system is fixed to an exterior surface of the evaporator, which is the coolest element of the refrigerant circuit, an excessive rise in temperature of the power transistor is prevented without both stagnating the flow of air in the duct which connects the cooling unit to the passenger compartment and causing the complicated assembly of the refrigerant circuit of the automobile air conditioning system.

## Claims

1. An automobile air conditioning system comprising a refrigerant circuit which includes a compressor (11), a condenser, an expansion element and an evaporator (250); and an electric circuit comprising at least one solid state unit (30) which controls an electrical device (12) of an element (11) of the refrigerant circuit; characterised in that the solid state unit is fixed to an exterior surface of the evaporator (250) so that heat generated in the solid state element (30) is conducted to an exterior surface of the evaporator(250).

2. A system according to claim 1, wherein the solid state unit (30) is fixed to an exterior surface (254) of the evaporator (250) other than a surface through which air passes in order to heat exchange with the refrigerant.

3. A system according to claim 1 or claim 2, wherein the solid state unit comprises a power transistor (31).

4. A system according to any one of the preceding claims, wherein the electrical device is a motor (12).

5. A system according to claim 4, wherein the motor (12) operates the compressor (11).

6. A system according to claim 4 or claim 5, wherein the power transistor (31) controls the electrical power which is supplied to the motor (12) so as to vary a rotational speed of the motor in response to demand.

## Patentansprüche

1. Fahrzeugklimaanlage mit einem Kühlkreislauf, der einen Kompressor (11), einen Kondensator, ein Expansionselement und einen Verdampfer (250) enthält; und
einer elektrischen Schaltung, die mindestens eine Festkörpereinheit (30) aufweist, die eine elektrische Einrichtung (12) eines Elementes (11) des Kühlkreislaufes steuert;
dadurch gekennzeichnet, daß die Festkörpereinheit an einer äußeren Oberfläche des Verdampfers (250) so befestigt ist, daß in dem Festkörperelement (30) erzeugte Wärme zu einer äußeren Oberfläche des Verdampfers (250) geleitet wird.

2. Anlage nach Anspruch 1,
bei der die Festkörpereinheit (30) an einer äußeren Oberfläche (254) des Verdampfers (250) befestigt ist, die nicht die Oberfläche ist, durch die Luft zum Wärmeaustausch mit dem Kühlmittel geht.

3. Anlage nach Anspruch 1 oder 2,
bei der die Festkörpereinheit einen Leistungstransistor (31) aufweist.

4. Anlage nach einem der vorhergehenden Ansprüche,
bei der die elektrische Einrichtung ein Motor (12) ist.

5. Anlage nach Anspruch 4,
bei der der Motor (12) den Kompressor (11) betreibt.

6. Anlage nach Anspruch 4 oder 5,
bei der der Leistungstransistor (31) die elektrische Leistung steuert, die an den Motor (12) so angelegt ist, daß eine Drehzahl des Motors als Reaktion auf Verlangen variiert wird.

## Revendications

1. Système de conditionnement d'air d'automobile comprenant un circuit réfrigérant muni d'un compresseur (11), d'un condenseur, d'un élément d'expansion et d'un évaporateur (250) ; et un circuit électrique muni d'au moins un bloc à l'état solide (30) qui commande un dispositif électrique (12) d'un élément (11) du circuit réfrigérant, caractérisé en ce que le bloc à l'état solide est fixé à une surface extérieure de l'évaporateur (250) de façon que la chaleur générée dans cet élément à l'état solide (30) est conduite vers une surface extérieure de l'évaporateur (250).

2. Système selon la revendication 1, caractérisé en ce que le bloc à l'état solide (30) est fixé à une surface extérieure (254) de l'évaporateur (250) autre qu'une surface à travers laquelle passe l'air pour produire un échange thermique avec le réfrigérant.

3. Système selon la revendication 1 ou la revendication 2, caractérisé en ce que le bloc à l'état solide comprend un transistor de puissance (31).

4. Système selon l'une quelconque des revendications précédentes, caractérisé en ce que le dispositif électrique est un moteur (12).

5. Système selon la revendication 4, caractérisé en ce que le moteur (12) fait fonctionner le compresseur (11).

6. Système selon la revendication 4 ou la revendication 5, caractérisé en ce que le transistor de puissance (31) commande la puissance électrique qui est fournie au moteur (12), de manière à faire varier la vitesse de rotation du moteur en réponse à la demande.
